(19) Europäisches Patentamt

European Patent Office

Office européen des brevets

(11) Veröffentlichungsnummer: **0 450 168 B1**

(12) **EUROPÄISCHE PATENTSCHRIFT**

(45) Veröffentlichungstag der Patentschrift: **02.11.94**

(21) Anmeldenummer: **90123916.0**

(22) Anmeldetag: **12.12.90**

(51) Int. Cl.⁵: **C08F 12/00**, C08F 240/00

(54) Verfahren zur Herstellung von säuremodifizierten, aromatischen Kohlenwasserstoffharzen und ihre Salze.

(30) Priorität: **06.04.90 DE 4011117**

(43) Veröffentlichungstag der Anmeldung:
**09.10.91 Patentblatt 91/41**

(45) Bekanntmachung des Hinweises auf die
Patenterteilung:
**02.11.94 Patentblatt 94/44**

(84) Benannte Vertragsstaaten:
**BE DE FR IT NL**

(56) Entgegenhaltungen:
**EP-A- 0 134 592**

(73) Patentinhaber: **RÜTGERSWERKE AKTIENGE-
SELLSCHAFT
Mainzer Landstrasse 217
D-60326 Frankfurt (DE)**

(72) Erfinder: **Stäglich, Peter, Dr.
Mommsenstrasse 12
W-4152 Kempen 1 (DE)**
Erfinder: **Friedrich, Bodo
Emmericher Strasse 139
W-4100 Duisburg 12 (DE)**
Erfinder: **Spengler, Hand, Dr.
Windmühlenweg 3
W-4716 Olfen (DE)**
Erfinder: **Zellerhoff, Robert, Dr.
Möllenkampweg 7
W-4236 Hamminkeln 4 (DE)**

**Beschreibung**

Die Erfindung betrifft ein verbessertes Verfahren zur Herstellung von aromatischen Kohlenwasserstoff-Harzen, die mit aromatischen Carbonsäuren, insbesondere mit aromatischen Hydroxicarbonsäuren modifiziert sind und deren Säure- und/oder Hydroxylgruppen entweder in saurer oder in Salzform vorliegen.

Derartige Harze sind aus EP-B 0 134 592 bekannt. Gemäß dieser Schrift werden Harze durch Umsetzung von aromatischen, ungesättigten Kohlenwasserstoffen mit aufgeschmolzenen aromatischen Carbonsäuren oder Hydroxicarbonsäuren in Gegenwart eines Friedel-Crafts-Katalysators bei 100 bis 160 °C umgesetzt.

Dieses Verfahren hat verschiedene Nachteile. So ist z. B. das Reaktionsgemisch stark korrosiv. Die Friedel-Crafts-Katalysatoren lassen sich nur unvollständig aus dem Harz entfernen und die abgetrennten, ausgewaschenen Katalysatoren stellen eine Umweltbelastung des Waschwassers dar.

Nach EP-B 0 219 457 werden Salze von salicylsäuremodifizierten Styrolharzen unter katalytischer Einwirkung von aromatischen Sulfonsäuren hergestellt. Eigene Arbeiten zeigten, daß mit aromatischen Sulfonsäuren bei 130 bis 150 °C gearbeitet werden muß, um Salicylsäure mit Styrol zu substituieren. Die Farbe des Reaktionsproduktes ist infolge dieser thermischen Beanspruchung unbefriedigend. Zudem ist eine Abtrennung des Katalysators nicht möglich, so daß dieser quantitativ im Reaktionsprodukt verbleibt. Die damit anschließend hergestellten Metallsalze haben eine graue bis beige Färbung, was bei der bevorzugten Anwendung dieser Produkte als Farbentwickler nicht erwünscht ist.

Aus EP-A 0 303 443 ist bekannt, derartige Salze von salicylsäuremodifizierten Styrolharzen dadurch herzustellen, daß anstelle der Salicylsäure deren Ester ins Reaktionsgemisch eingesetzt wird und die Estergruppe nach erfolgter Polymerisation hydrolytisch gespalten wird. Obwohl die Polymerisation selbst bei niedrigen Temperaturen durchgeführt werden kann, erfordert die anschließende Hydrolyse des gebildeten substituierten Salicylsäureesters wieder erhöhte Temperaturen, so daß rötlich braune Reaktionsprodukte erhalten werden. Neben der Farbqualität ist bei diesem Verfahren auch die Komplizierung und Verteuerung durch den zusätzlich erforderlichen Hydrolyseschritt unbefriedigend.

Es ist daher die Aufgabe der vorliegenden Erfindung, ein verbessertes Verfahren zur Herstellung von säuremodifizierten, aromatischen Kohlenwasserstoff-Harzen und ihrer Salze bereitzustellen, bei dem das Reaktionsgemisch möglichst geringfügig korrosiv ist, bei dem die Polymerisation möglichst einfach und ohne aufwendigen nachfolgenden Reaktionsschritt erfolgt und helle Harze bzw. Salze erhalten werden und bei dem der Katalysator einfach abgetrennt und sogar wiederverwendet werden kann.

Die Lösung der Aufgabe erfolgt durch ein Verfahren gemäß der Ansprüche 1 bis 8.

Es wurde gefunden, daß sich mit aromatischen Carbonsäuren modifizierte Kohlenwasserstoff-Harze in einfacher Weise dadurch herstellen lassen, daß die aromatischen Carbonsäuren und Methansulfonsäure in einem aliphatischen Lösemittel suspendiert werden und zu dieser Suspension der oder die aromatischen, ungesättigten Kohlenwasserstoffe langsam zudosiert werden.

Bei dieser einfachen Polymerisation ist das Reaktionsgemisch nur geringfügig korrosiv. Der Katalysator kann, da er im Reaktionsgemisch nicht löslich ist, nach beendeter Reaktion in einfachster Weise abgetrennt und gegebenenfalls wiederverwendet werden. Die Polymerisation bzw. Copolymerisation der ungesättigten Aromaten mit den aromatischen Carbonsäuren erfolgt in einfacher Reaktion bei Temperaturen im Bereich von 20 bis 200 °C, bevorzugt im Bereich von 80 bis 120 °C.

Dies ist insofern überraschend, als sich in diesem Temperaturbereich sowohl der Katalysator als auch die Reaktionskomponente aromatische Carbonsäure nicht in dem eingesetzten aliphatischen Lösemittel lösen. Es stellte sich jedoch heraus, daß bei langsamer Zudosierung der ungesättigten, aromatischen Kohlenwasserstoffe ausreichend aromatische Carbonsäure als Reaktionskomponente zur Verfügung steht, so daß am Ende der Polymerisationsreaktion auch die gesamte Menge der aromatischen Carbonsäuren in das entstandene Harz eingebaut ist.

Die Geschwindigkeit der Zudosierung der ungesättigten, aromatischen Kohlenwasserstoffe ist abhängig von der gewählten Grüße des Reaktionsansatzes, der Reaktivität der eingesetzten ungesättigten, aromatischen Kohlenwasserstoffe und der gewählten Reaktionstemperatur. Der Ausdruck "langsam zudosiert" ist so zu verstehen, daß die ungesättigten, aromatischen Kohlenwasserstoffe nicht auf einmal sondern in mehreren Portionen zugegeben werden, die es erlauben, daß die zuerst vorgegebenen ungesättigten, aromatischen Kohlenwasserstoffe im wesentlichen polymerisiert sind - unter Einbau geringer Mengen aromatischer Carbonsäure - bevor weitere ungesättigte Aromaten zudosiert werden. In einem Laboransatz wird dies erreicht durch stetes Zutropfen dieser Reaktionskomponente. In einem betrieblichen Ansatz erfolgt, je nach Ansatzgröße die Zugabe der ungesättigten, aromatischen Kohlenwasserstoffe, kontinuierlich über einen Zeitraum von 30 bis 120 min. Ist die Zugabegeschwindigkeit zu groß, so bilden sich Polymerisate der ungesättigten aromatischen Kohlenwasserstoffe, die keine aromatische Carbonsäure eingebaut enthalten, sogenannte Neutralharze, neben den erfindungsgemäß mit aromatischen Carbonsäuren modifizierten Harzen.

Für die Anwendungsbereiche, in denen die erfindungsgemäß hergestellten, mit Säuren modifizierten Harze Naturharze ersetzen sollen, ist ein Anteil von bis 40 % an Neutralharzen nicht nachteilig. Bei anderen Anwendungen, etwa der Verwendung als Farbentwicklerharze, vermindern Neutralharze die Qualität.

Es wurde jedoch gefunden, daß die Neutralharze in einfacher Weise von den säuremodifizierten Harzen abgetrennt werden können, indem die säuremodifizierten Harze nach beendeter Reaktion und nach dem Abtrennen der Methansulfonsäure mit Alkalilauge in eine wasserlösliche Form übergeführt und somit in wäßriger Lösung abgetrennt werden. Nach Ansäuern dieser Lösung fallen die säuremodifizierten Harze in reiner Form aus. Mitunter aber sind diese Harze in Form ihrer Salze mit mehrwertigen Metallionen etwa des Zinks, erwünscht. Diese werden erhalten, indem die wäßrigen Lösungen der Alkalisalze dieser Harze mit wäßrigen Lösungen von Salzen der entsprechenden mehrwertigen Metalle mit Mineral- oder Carbonsäuren umgesetzt werden.

Zur Durchführung des erfindungsgemäßen Verfahrens werden die aromatische Carbonsäure oder ein Gemisch aromatischer Carbonsäuren und Methansulfonsäure bei Raumtemperatur oder einer Temperatur im Bereich bis zur gewünschten Reaktionstemperatur in einem aliphatischen Lösemittel suspendiert. Es ist einleuchtend, daß die Suspension umso leichter hergestellt und aufrechterhalten werden kann, je feinteiliger die eingesetzten aromatischen Carbonsäuren sind.

Als aromatische Carbonsäuren können alle unsubstituierten oder substituierten ein- oder mehrkernigen aromatischen Carbonsäuren eingesetzt werden. Beispiele sind die 2-, 3-Carboxybiphenyl, m-, p-Hydroxybenzoe-, Anis-, p-Ethoxybenzoe-, p-Propoxybenzoe-, p-Benzyloxybenzoe-, p-Phenoxybenzoe-, Gallus-, Anthranil-, m-, p-Aminobenzoesäure, 3-Isopropyl-4-hydroxybenzoe-, 3-sek.Butyl-4-hydroxybenzoe-, 3-Cyclohexyl-4-hydroxybenzoe-, 3-Phenyl-4-hydroxybenzoe-, 3-Benzyl-4-hydroxybenzoe-, Salicyl-, o-, m-, p-Kresotin-, 3-, 4-Ethylsalicyl-, 3-Isopropylsalicyl-, 3-sek.-, 5-sek.-, 3-tert.Butylsalicyl-, 3-, 5-Cyclohexylsalicyl-, 3-, 5-Phenylsalicyl-, 3-, 5-Benzylsalicyl-, 5-tert.Octylsalicyl-, 3-, 5-(alpha-Methylbenzyl)salicyl-, 3-, 5-Nonylsalicyl-, 5-(alpha,alpha-Dimethylbenzyl)salicyl-, 3-, 5-Chlorsalicyl-, 3-, 4-, 5-, 6-Hydroxysalicyl-, 3-Ethoxysalicyl-, 3-, 4, 5-Methoxysalicyl-, 5-Octoxysalicyl-, -phenylsalicyl-, -(alpha-methylbenzyl)-salicyl-, -(alpha,alpha-dimethylbenzyl)-salicyl-, -chlorsalicyl-, 3,5-Dimethylsalicyl-, 3-Methyl-5-tert.butylsalicyl-, 3-Isopropyl-5- cyclohexylsalicyl-, -(alpha-methylbenzyl)-salicyl-, -(alpha,alpha-dimethylbenzyl)-salicyl-, -(4-tert.butylphenyl)-salicyl-, 3-(4'-tert.Octylphenyl)-5-tert.octylsalicyl-, 3-[4'-(alpha,alpha-Dimethylbenzyl)-phenyl]-5-(alpha,alpha-dimethylbenzyl)-salicyl-, 3,5-Di-alpha-Methylbenzylsalicyl-, 3,5-Di-alpha,alpha-dimethylbenzylsalicyl-, 3-Phenyl-5-alpha,alpha-dimethylbenzylsalicyl-, 3-Hydroxysalicylsäure, 1-Hydroxy-2- carboxynaphthalin, -carboxy-4-isopropylnaphthalin, -carboxy-7-cyclohexylnaphthalin oder 5-(4'-Hydroxylbenzyl)-salicylsäure.

Bevorzugte Säuren sind die o-, m- und p-Hydroxybenzoesäure.

Als aliphatisches Lösemittel kann etwa ein reines Alkan dienen wie z. B. n-Hexan oder n-Heptan oder auch Benzinfraktionen, deren Siedebereich im Bereich der gewählten Reaktionstemperatur liegt. Die Menge soll ausreichen, um die aromatische Carbonsäure zu suspendieren. Im allgemeinen wird die 0,5 bis 2-fache Volumenmenge, bezogen auf die aromatische Carbonsäure, eingesetzt.

Die als Katalysator eingesetzte Methansulfonsäure wird in einer Menge von 0,1 bis 20 Gew.-%, bezogen auf die aromatische Carbonsäure, eingesetzt. Infolge der Rezirkulierung der Methansulfonsäure kann auch unbedenklich eine größere Katalysatorkonzentration eingesetzt werden, was geringere Reaktionstemperaturen, folglich niedrigere thermische Belastung und somit bessere Farbqualität des erfindungsgemäß hergestellten Harzes ermöglicht.

In die vorgegebene Suspension werden bei der gewählten Reaktionstemperatur unter Rühren langsam die ungesättigten, aromatischen Kohlenwasserstoffe zugegeben, wobei die Menge der zugegebenen ungesättigten, aromatischen Kohlenwasserstoffe bei 1 bis 4 Mol, vorzugsweise bei 1,5 bis 2,5 Mol, bezogen auf 1 Mol der aromatischen Carbonsäure, liegt.

Ungesättigte aromatische Verbindungen, die sich zur Herstellung der erfindungsgemäßen Harze eignen, sind z. B. Inden, Styrol, alpha-Methylstyrol, Methylinden oder Vinyltoluol, die als Reinsubstanzen oder im Gemisch eingesetzt werden können.

Andere einsetzbare polymerisierbare, aromatische Kohlenwasserstoffgemische finden sich einerseits in den im Temperaturbereich von 140 bis etwa 220 °C siedenden Destillaten aus Steinkohlenhochtemperaturteer, andererseits entstehen ungesättigte, aromatische Kohlenwasserstoffe bei der Crackung von Naphtha oder Gasöl sowie bei der Pyrolyse von Crackrückständen und sind in einer im Bereich von 160 bis 220 °C siedenden Fraktion, der sogenannten Harzölfraktion, angereichert. Diese Fraktionen enthalten als ungesättigte, aromatische Verbindungen im wesentlichen Inden, Vinyltoluol, Methylinden, Cumaron, Dicyclopentadien, Methylcyclopentadien, Styrol und alpha-Methylstyrol in einer Konzentration von 50 bis 70 % neben nicht reaktiven aromatischen Verbindungen.

EP 0 450 168 B1

Im Laufe der Zugabe der ungesättigten, aromatischen Verbindungen geht die dispergierte, aromatische Carbonsäure allmählich in benzinlösliche Derivate über. Nach vollendeter Zugabe der ungesättigten Aromaten liegt eine homogene, hellbraune Benzinlösung der Reaktionsprodukte vor, in welcher die Methansulfonsäure durch die Rührbewegung fein verteilt ist. Da die Methansulfonsäure nach beendeter Zugabe der ungesättigten Aromaten und Ausschalten des Rührers durch Schwerkraft, Zentrifugaldekanter oder dergleichen wieder abgetrennt und rezirkuliert werden kann, zeichnet sich das erfindungsgemäße Verfahren durch Umweltfreundlichkeit, niedrige Katalysatorkosten und arbeitsmedizinische Unbedenklichkeit der erfindungsgemäße hergestellten Harze aus.

Nach beendeter Reaktion und Abtrennung des Katalysators, was durch Schwerkraft (Absitzenlassen), Zentrifugaldekanter oder dergleichen erfolgen kann, wird in der bevorzugten Durchführung des erfindungsgemäßen Verfahrens die Benzinlösung mit einer äquimolekularen Menge 5 bis 10 %iger Alkalilauge extrahiert. Auf diese Weise werden die Verbindungen, welche infolge ihrer Hydroxy- und Carbonsäuregruppen laugelöslich sind, von den laugeunlöslichen Neutralharzmolekülen befreit, die in dem aliphatischen Lösemittel verbleiben. Das Neutralharz kann nach Abdestillation des Lösemittels vorteilhaft in den für Weichharze üblichen Anwendungen eingesetzt werden, z. B. als Modifizierungsmittel für Epoxidharz- und Polyurethansysteme, Weichermacher oder Klebrigmacher in SBS, ABS, EVA etc.

Aus der Alkalisalzlösung der mit aromatischen Carbonsäuren modifizierten, aromatischen Kohlenwasserstoff-Harze kann anschließend durch Ansäuern das mit Hydroxyl- und Säuregruppen modifizierte, neutralharzfreie Harz ausgefällt werden.

Andererseits aber kann aus der Alkalilösung der mit aromatischen Carbonsäuren modifizierten, aromatischen Kohlenwasserstoff-Harze bei Umgebungstemperatur, gegebenenfalls auch bei erhöhter Temperatur, durch doppelte Umsetzung mit einer Lösung eines mehrwertigen Metallsalzes das entsprechende Metallsalz der substituierten Hydroxycarbonsäuren erhalten werden. Als Metallsalze können die Metallsalze von Mineralsäuren oder niederen Carbonsäuren eingesetzt werden, wobei das Kation z. B. Aluminium, Zinn, Zirkonium und vorzugsweise Zink sein kann. Es entsteht eine wäßrige, weiße Dispersion des Metallsalzes der Alkalilösung der mit aromatischen Carbonsäuren modifizierten, aromatischen Kohlenwasserstoff-Harze, welche nach Feinmahlung auf eine Kornfeinheit von 1 bis 5 $\mu$m als Streichdisperion für die Herstellung von farbentwicklerbeschichteten druck- und wärmeempfindlichen Aufzeichnungsmaterialien verwendet werden kann. Der Farbbildner, welche mit dem erfindungsgemäß hergestellten Entwickler zu kombinieren sind, können z. B. den Substanzklassen der Phthalide, Azophthalide, Fluorane, Spiropyrane, Spirodipyrane, Azomethine, Chinazoline, Leukoauramine, Triarylmethanleukofarbstoffe, Carbazolylmethane, Rhodaminlaktame, Chromenopyrazole, Phenoxazine, Phenothiazine oder Chromanfarbstoffe angehören.

Die Erfindung wird durch nachfolgende Beispiele erläutert.

Beispiele

Beispiel 1

200 g Salicylsäure und 20 g Methansulfonsäure werden bei 40 bis 66 °C in 300 ml n-Hexan suspendiert. Zu dieser Suspension werden unter Rühren 500 g einer im Bereich von 160 bis 220 °C siedenden Destillatfraktion aus Steinkohlenteer mit einem Gehalt von 65 % an ungesättigten aromatischen Verbindungen kontinuierlich so langsam zugegeben, daß die Zugabe nach 90 min beendet ist. Danach wird noch eine Stunde unter Rühren unter Rückfluß erhitzt, danach der Rührer abgestellt und die sich abscheidende Methansulfonsäure abgetrennt. Das verbleibende Reaktionsgemisch wird bis zu einer Temperatur von 250 °C destilliert. Als Rückstand verbleiben 525 g eines Harzes mit einem Erweichungspunkt (Kraemer-Sarnow) von 60 °C und einer Helligkeit B1. Das Harz läßt sich in Druckfarben und in wäßrigen Lacksystemen einsetzen.

Beispiele 2 bis 8

Analog zu Beispiel 1 werden 138 g Salicylsäure und 10 g Methansulfonsäure in 100 ml n-Hexan suspendiert und bei 40 bis 66 °C mit 260 g Styrol versetzt. Die Styrolzugabe ist nach 60 min beendet. Nach Aufarbeitung durch Abtrennen der Methansulfonsäure, Extraktion mit 10 %iger Natronlauge und Ausfällen des Umsetzungsprodukts von Styrol und Salicylsäure aus seiner Natriumsalzlösung mit HCl ergibt sich in 61 %iger Ausbeute (bezogen auf Einsatz Salicylsäure + Styrol) ein hellgelbes Weichharz. Die Aufarbeitung der n-Hexanphase ergibt 35 % Styrolharz.

Analog hierzu werden weitere Versuche unter modifizierten Bedingungen durchgeführt.

4

Reaktionsbedingungen und Ergebnisse sind in nachstehender Tabelle enthalten.

Tabelle

| Beispiel | 2 | 3 | 4 | 5 | 6 | 7 | 8 |
|---|---|---|---|---|---|---|---|
| Salicylsäure [g] | 138 | 138 | 138 | 138 | 138 | 138 | 138 |
| n-Hexan [g] | 100 | 100 | | | | | |
| Benzin 100/125 °C [g] | | | 100 | 100 | 100 | | |
| Benzin 140/200 °C [g] | | | | | | 100 | 100 |
| Methansulfonsäure [g] | 10 | 33 | 33 | 20 | 20 | 33 | 10 |
| Styrol [g] | 260 | 260 | 260 | 260 | 260 | 260 | 260 |
| Divinylbenzol [g] | | | | | | | |
| Starttemperatur [°C] | 40 | 40 | 90 | 100 | 100 | 115 | 100 |
| Maximaltemperatur [°C] | 66 | 68 | 104 | 106 | 104 | 142 | 105 |
| Reaktionszeit [min] | 60 | 60 | 60 | 90 | 90 | 60 | 60 |
| Ausbeute [%] | 61 | 63 | 69 | 78 | 74 | 69 | 61 |
| Neutralharz [%] | 35 | 32 | 27 | 17 | 19 | 29 | 36 |
| Säurezahl [mg KOH/g] | 205 | 212 | 190 | 181 | 170 | 194 | 203 |
| Helligkeit [% I] | 98 | 98 | 97 | 95 | 96 | 95 | 97 |
| Löslichkeit in NaOH | gut | gut | gut | gut | gut | gut | gut |

Beispiel 9

245 g Salicylsäure und 35 g Methansulfonsäure werden in 175 ml Benzin 100/125 suspendiert und bei 110 °C mit 465 g Styrol versetzt. Die Styrolzugabe ist nach 60 min beendet. Nach Zugabe von weiteren 575 g Benzin 100/125 und von 1.340 g 6,4 %iger Natronlauge werden die Phasen getrennt. Die wäßrig-alkalische Lösung des Salicylsäure-haltigen Harzes wird nochmals mit 450 g Benzin extrahiert und destillativ von Benzinresten befreit. Man erhält 1.931 g einer wäßrigen ca. 33 %igen Lösung des Natriumsalzes. Dies entspricht einer Ausbeute von 91 % der Theorie bezogen auf eingesetzte Salicysäure.

Beispiel 10

245 g Salicylsäure und 35 g Methansulfonsäure werden in 175 ml Benzin 100/125 suspendiert und bei 110 °C mit 465 g Styrol versetzt. Die Styrolzugabe ist nach 60 min beendet. Nach Zugabe von weiteren 575 g Benzin 100/125 wird mit 1.230 g Wasser extrahiert, wobei 1.307 g Abwasser entsteht, aus welchem durch Abdampfen als Rückstand die Methansulfonsäure sowie unumgesetzte Salicylsäure wiedergewonnen und rezirkuliert wird. Mit 1.340 g 6,4 %iger Natronlauge wird aus der Polymerisatlösung das alkalilösliche Hauptprodukt extrahiert. Die wäßrig-alkalische Lösung dieses Harzes wird nochmals mit 450 g Benzin extrahiert und destillativ von Benzinresten befreit. Man erhält 1.890 g einer wäßrigen ca. 34 %igen Lösung des Natriumsalzes. Dies entspricht einer Ausbeute von 90 % der Theorie bezogen auf eingesetzte Salicylsäure.

Beispiel 11

286 g Zinksulfatlösung (15 % Zinksulfat) werden vorgelegt und unter Rühren mit 300 g einer 30 %igen Lösung des Natriumsalzes aus Beispiel 9 versetzt. Dabei fällt eine weiße Dispersion des Zinksalzes an, welche als farbentwickelnde Komponente in Papierbeschichtungen für druck- oder wärmeempfindliche Aufzeichnungsmaterialien dienen kann.

**Patentansprüche**

1. Verfahren zur Herstellung von mit aromatischen Carbonsäuren modifizierten, aromatischen Kohlenwasserstoff-Harzen, **dadurch gekennzeichnet**, daß die aromatischen Carbonsäuren und Methansulfonsäure in einem aliphatischen Lösemittel suspendiert werden, zu dieser Suspension der oder die aromatischen, ungesättigten Kohlenwasserstoffe langsam zudosiert werden und die Umsetzung im Temperaturbereich von 20 °C bis 200 °C erfolgt.

2. Verfahren nach Anspruch 1, **dadurch gekennzeichnet**, daß die Umsetzung im Temperaturbereich von 80 °C bis 120 °C erfolgt.

3. Verfahren nach den Ansprüchen 1 und 2, **dadurch gekennzeichnet**, daß als aliphatisches Lösemittel ein Benzin mit einem Siedebereich von 100 °C bis 120 °C verwendet wird.

4. Verfahren nach den Ansprüchen 1 bis 3, **dadurch gekennzeichnet**, daß als aromatische Carbonsäure o-, m- oder p-Hydroxybenzoesäure eingesetzt wird.

5. Verfahren nach den Ansprüchen 1 bis 4, **dadurch gekennzeichnet**, daß als aromatische, ungesättigte Kohlenwasserstoffe Styrol und/oder alpha-Methylstyrol eingesetzt wird.

6. Verfahren nach den Ansprüchen 1 bis 4, **dadurch gekennezeichnet**, daß als aromatische, ungesättigte Kohlenwasserstoffe eine im Temperaturbereich von 140 °C bis 220 °C siedende Fraktion ungesättigter aromatischer Kohlenwasserstoffe eingesetzt wird.

7. Verfahren zur Herstellung von Alkalisalzen der mit aromatischen Carbonsäuren modifizierten, aromatischen Kohlenwasserstoff-Harze, **dadurch gekennzeichnet**, daß das Reaktionsgemisch nach beendeter Reaktion und dem Abtrennen der Methansulfonsäure mit wäßriger Alkalilauge extrahiert wird.

8. Verfahren zur Herstellung von Salzen der mit aromatischen Carbonsäuren modifizierten, aromatischen Kohlenwasserstoff-Harze mit mehrwertigen metallionen, **dadurch gekennzeichnet**, daß die wäßrigen Lösungen der Alkalisalze des Harzes mit wäßrigen Lösungen von Salzen der mehrwertigen Metalle mit Mineral- oder Carbonsäuren umgesetzt werden.

## Claims

1. A process for the preparation of aromatic hydrocarbon resins modified with aromatic carboxylic acids comprising suspending methane sulfonic acid and the aromatic carboxylic acids in an aliphatic solvent and slowly proportioning at least one unsaturated aromatic hydrocarbon into the suspension under polymerization conditions and reacting the mixture in a temperature range of 20 to 200 °C.

2. The process of claim 1 wherein the polymerization is effected at 80 to 120 °C.

3. The process of claims 1 and 2 wherein the aliphatic solvent is a benzine with a boiling point of 100 to 120 °C.

4. The process of claims 1 to 3 wherein the aromatic carboxylic acid is o-, m- or p-hydroxy benzoic acid.

5. The process of claims 1 to 4 wherein the unsaturated aromatic hydrocarbon is at least one member of the group consisting of styrene and $\alpha$-methyl-styrene.

6. The process of claims 1 to 4 wherein the unsaturated aromatic hydrocarbon is a fraction of unsaturated aromatic hydrocarbons with a boiling range of 140 to 220 °C.

7. A process for the preparation of alkali salts of aromatic hydrocarbon resins modified with aromatic carboxylic acids comprising extracting the reaction mixture with aqueous alkali lye after the reaction is finished and the methane sulfonic acid is removed.

8. A process for the preparation of salts of aromatic hydrocarbon resins modified with aromatic carboxylic acids comprising reacting the aqueous solutions of the alkali salts of the resin with aqueous solutions of salts of polyvalent metals and mineral or carboxylic acids.

## Revendications

1. Procédé pour la préparation de résines aromatiques d'hydrocarbures modifiées par des acides carboxyliques aromatiques, caractérisé en ce que les acides carboxyliques aromatiques et l'acide méthane-sulfonique sont mis en suspension dans un solvant aliphatique et en ce que l'on ajoute lentement à cette suspension le ou les hydrocarbures aromatiques non saturés et en ce que la réaction s'effectue dans la plage de températures de 20 à 200 °C.

2. Procédé selon la revendication 1, caractérisé en ce que la réaction s'effectue dans une plage de températures de 80 à 120 °C.

3. Procédé selon les revendications 1 et 2, caractérisé en ce qu'en tant que solvant aliphatique, on utilise une essence ayant un domaine d'ébullition de 100 °C jusqu'à 120 °C.

4. Procédé selon les revendications 1 à 3, caractérisé en ce qu'en tant qu'acide carboxylique aromatique, on met en oeuvre l'acide o-, m- ou p-hydroxybenzoïque.

5. Procédé selon les revendications 1 à 4, caractérisé en ce qu'en tant qu'hydrocarbures aromatiques non saturés, on met en oeuvre du styrol et/ou de l'alpha-méthylstyrol.

6. Procédé selon les revendications 1 à 4, caractérisé en ce qu'en tant qu'hydrocarbures aromatiques non saturés, on met en oeuvre une fraction entrant en ébullition dans la plage de températures de 140 °C jusqu'à 220 °C d'hydrocarbures non saturés aromatiques.

7. Procédé pour la préparation de sels alcalins des résines d'hydrocarbures aromatiques modifiées par des acides carboxyliques aromatiques, caractérisé en ce que le mélange réactionnel est extrait après l'achèvement de la réaction et la séparation de l'acide méthane-sulfonique avec une lessive alcaline aqueuse.

8. Procédé pour la préparation de sels des résines d'hydrocarbures aromatiques modifiées par des acides carboxyliques aromatiques avec des ions métalliques polyvalents, caractérisé en ce que les solutions aqueuses des sels alcalins de la résine sont mises en réaction avec des solutions aqueuses de sels des métaux polyvalents avec des acides minéraux ou carboxyliques.